**Europäisches Patentamt**

**European Patent Office**

**Office européen des brevets**

(19)

(11) Veröffentlichungsnummer: **0 292 933 B1**

## EUROPÄISCHE PATENTSCHRIFT

(12)

(45) Veröffentlichungstag der Patentschrift:
24.07.91 Patentblatt 91/30

(51) Int. Cl.⁵: **F01C 21/04**, F01C 1/22,
F01M 1/06, F16N 7/36,
F02B 53/00

(21) Anmeldenummer: 88108319.0

(22) Anmeldetag: 25.05.88

(54) Schmiersystem für das Exzenterlager einer Rotationskolbenbrennkraftmaschine.

(30) Priorität: 26.05.87 DE 3717801
26.05.87 DE 3717802

(43) Veröffentlichungstag der Anmeldung:
30.11.88 Patentblatt 88/48

(45) Bekanntmachung des Hinweises auf die
Patenterteilung:
24.07.91 Patentblatt 91/30

(84) Benannte Vertragsstaaten:
DE ES GB

(56) Entgegenhaltungen:
DE-A- 1 576 207
DE-A- 2 258 712
DE-C- 726 453
FR-A- 996 293
FR-A- 2 097 759
FR-A- 2 155 676

(73) Patentinhaber: Wankel GmbH
Attilastrasse 56
W-1000 Berlin 42 (DE)

(72) Erfinder: Eiermann, Dankwart
Kirchstrasse 43
W-8995 Weissensberg-West (DE)
Erfinder: Klusowski, Hans-Jürgen
Dorfstrasse 12
W-8997 Hergensweiler (DE)

(74) Vertreter: Freiherr von Welser, Hubert
Danziger Strasse 15
W-8000 München 40 (DE)

## Beschreibung

Die Erfindung betrifft das Schmiersystem für das Exzenterlager einer Rotationskolbenbrennkraftmaschine gemäß dem Oberbegriff von Anspruch 1.

Bei derartigen Maschinen werden das Lager des Kolbens auf dem Exzenter und die Zahnräder des Synchrongetriebes durch Kühlöl geschmiert, daß über Bohrungen in der Exzenterwelle durch das Lager des Kolbens zu dessen Kühlung in die im Kolben vorgesehenen Hohlräume aus einem Ölkreislauf gefördert wird. Bei einer anderen Konstruktion wird das Schmieröl mit der Saugluft zugeführt und mit dieser durch den Kolben zu dessen Kühlung geleitet. In beiden Fällen ergibt sich ein hoher Ölverbrauch und eine undosierte Lagerschmierung und es wird eine Abdichtung der Arbeitsräume gegen Ölübertritt aus dem Lager- und Getrieberaum notwendig. Auch ist in beiden Fällen das Öl bereits erwärmt, wenn es in das Lager des Kolbens gelangt, entweder durch die im Ölkreislauf enthaltene oder durch die Kühlung des Kolbens und durch Verwirbelung aufgenommene Wärme, und in beiden Fällen ist das Öl verunreinigt.

Mit DE A 1576207 wird eine Anordnung für die Schmierung des Exzenterlagers bei gemischt gekühltem Kolben beschrieben, bei der am Exzenter eine schmale Ölfangrinne befestigt ist, die 4 um einen lippenförmigen Ansatz des Wellenlagers greift. Das Öl wird über dieses Lager zugeführt und soll von der Wellendrehung über die Lippe dieses Ansatzes in die Fangrinne geschleudert werden. Von dort soll es durch Fliehkraftwirkung über Bohrungen im Exzenter ins Exzenterlager gelangen. Daß den Exzenter zu dessen Kühlung durch strömende Ladegemisch reißt jedoch mit seiner hohen Geschwindigkeit das von der Welle abgespritzte Öl vor der Fangrinne weg und aus dieser heraus, so daß das Exzenterlager unversorgt trocken laufen muß. Auch war es bei diesem Maschinentyp und insbesondere zur Zeit der Anmeldung dieses Rechts unbeachtlich, daß das nun in den Raum zwischen Kolben und Seitenwand gelangende Öl, da auf eine Ölinnendichtung verzichtet wurde bzw. für diese kein Platz vorhanden ist, in größeren Mengen die Gasdichtungen in die Arbeitsräume gelangt.

Aufgabe der Erfindung war es demgegenüber, dem Lager des Kolbens kaltes und frisches Öl in dosierten geringen Abmessungen zuzuführen. Die Dosierung soll so bemessen sein, daß der nach Verbrauch für die Lagerschmierung aus dem Lager des Kolbens in den Raum des Synchrongetriebes austretende Rest des Öles noch ausreicht, um sowohl dieses wie die Dichtelemente der Arbeitsräume zu schmieren, daß aber kaum mehr weiteres Öl in die Arbeitsräume übertritt.

Die Lösung dieser Aufgabe ergibt sich bei den eingangs genannten Maschinen mit den in den Patentansprüchen gekennzeichneten Maßnahmen.

Ein besonderer vorteil des erfindungsgemäßen Schmiersystems ist es, daß auf axiale Öldichtungen in den Kolbenseitenwänden, mit denen das Öl im Lager- und Getrieberaum zurückgehalten werden soll, verzichtet werden kann. Die Zuführung des Öls in die Mitte des Lagers des Kolbens sichert dessen gleichmäßige Schmierung. Ein weiterer Vorteil ist es, daß die Erfindung ohne Schwierigkeit auch auf Maschinen angewendet werden kann, die hohl ausgebildete Exzenterwellen aufweisen.

Ein Ausführungsbeispiel wird im folgenden anhand der Zeichnungen beschrieben. Es zeigen

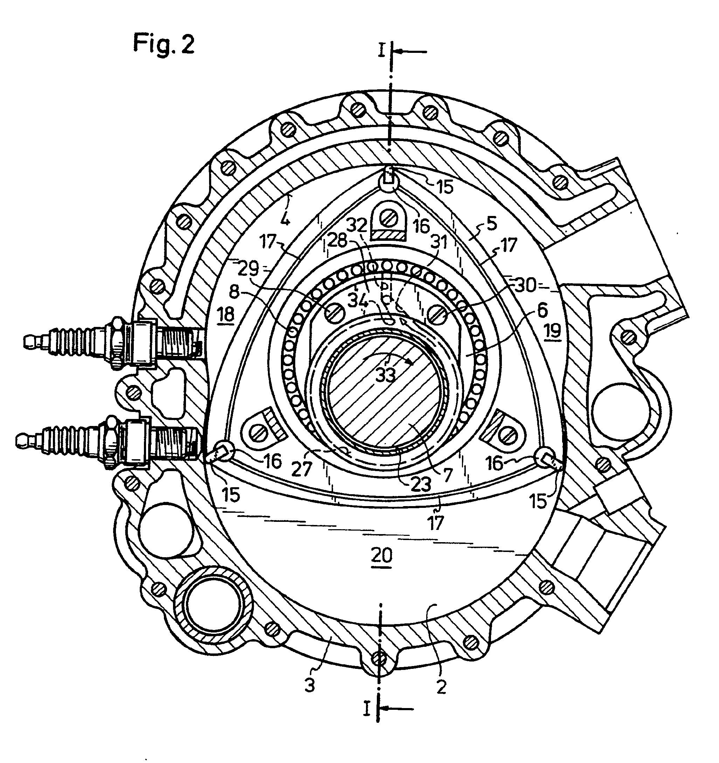

Fig. 1    einen axialen Schnitt durch eine Rotationskolbenbrennkraftmaschine mit dem erfindungsgemäßem Schmiersystem des Kolbenlagers in Ebene I-I in Figur 2

Fig.2    einen radialen Schnitt durch die gleiche Machinenebene II-II in Figur 1 ;

In den Zeichnungen ist eine 2 : 3 Übersetzerrotationskolbenbrennkraftmaschine der trochoiden Bauweise gezeigt, bei der das Gehäuse bestehend aus den Seitenteilen 1 und 2 und dem Mantelteil 3 schematisch wiedergegeben ist. Das Mantelteil 3 weist an seiner Innenseite eine trochoidenförmige Mantellaufbahn 4 auf, an der der Kolben 5 mit seinen Ecken in ständiger Anlage entlanggleitet. Der Kolben 5 ist auf einem Exzenter 6 einer Welle 7 mit dem Rollenlager 8 gelagert. Die Welle 7 durchsetzt die Seitenteile 1 und 2 senkrecht und ist in diesen bei 9 und 10 gelagert.

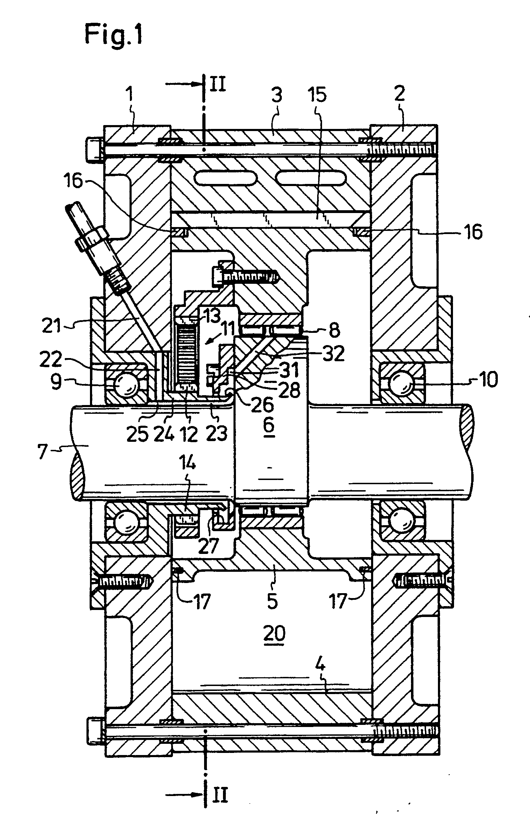

Die Bewegung des Kolbens 5 im Verhältnis zu der der Welle 7 wird durch das in Figur 1 gezeigte Synchrongetriebe 11 gesteuert, das aus dem im Seitenteil 1 feststehenden Ritzel 12 und dem am Kolben feststehenden Hohlrad 13 besteht. Das um die Welle liegende Ritzel 12 ist an einem im Seitenteil 1 verschraubten Einsatzteil 14 befestigt, in dem das Wellenlager 9 angeordnet ist. Das Einsatzteil 14 verschließt die Öffnung im Seitenteil 1, durch die bei der Montage der Exzenter 6 geschoben werden kann. Am Kolben sind Dichtteile vorgesehen und zwar Radialleisten 15, Dichtbolzen 16 und axial dichtende Seitenstreifen 17, die die Arbeitskammern 18, 19, 20 untereinander und gegenüber dem Maschineninnenraum abdichten.

In Seitenteil 1 ist eine Zuführungsbohrung 21 für das für die Schmierung des Kolbenlagers 8 bestimmte Schmieröl eingebracht. Sie steht in Verbindung mit einer weiteren Bohrung 22 im Einsatzteil 14, die zur Oberfläche der Welle 7 durchgeht und dort in einen engen Ringraum 23 zwischen der das Ritzel 12 tragenden Hülse 24, die das Einsatzteil 14 axial nach innen verlängert, und der Welle 7 mündet. Der Spalt, den dieser Ringraum 23 bildet, muß weiter sein als der Ringspalt 25 zwischen Welle und dem außerhalb, d.h. in der Zeichnung links, der Mündung der weiteren Bohrung 22 liegenden Abschnittes 25 des Einsatzteiles 14, um ein Austreten des Öles nach dem Wellenlager 9 zu verhindern.

Die das Ritzel 12 tragende Hülse 24 ragt über dieses hinaus und ist an ihrem in der Zeichnung rechten Ende konusförmig zu einer Abspritzkante 26 erweitert. Das über die Bohrungen 21, 22 zugeführte Öl wird durch nachdringendes Öl in dem Ringraum 23 in Richtung auf den Exzenter 6 zu gefördert und wird durch die von der Drehung der Welle 7 erzeugte Fliehkraft bei Erreichen der Abspritzkante 26 schräg nach außen und auf die linke Seitenwand des Exzenters 6 abgeschleudert.

An der der Abspritzkante 26 zugekehrten rechten Wand des Exzenters 6 ist eine um die Welle 7 gelegte und mit dieser konzentrische Fangrinne 27 vorgesehen, die sich radial nach innen öffnet und in die alles bei der Abspritzkante 26 abgeschleuderte Öl gelangt. Die Fangrinne 27 ist an einem flachen Teil 28 vorgesehen, das an der in der Zeichnung linken Seitenwand des Exzenters 6 bei 29 und 30 verschraubt ist. In der am Exzenter 6 anliegenden Seite des flachen Teiles 28 ist eine radial nach außen sich erstrekkende schmale Tasche 31 vorgesehen, die einerseits mit der Fangrinne 27 und andererseits an ihrem radial äußeren Ende mit einer in die axiale Mitte des Rollenlagers 8 durch den Exzenter führende Bohrung 32 in Verbindung steht.

Die in Drehrichtung der Welle 7, angezeigt durch den Pfeil 33, nachlaufende Abschlußkante 34 der Tasche 31 ist in Drehrichtung nach vorne gezogen, so daß bei Beschleunigung der Maschine in der Tasche 31 gestautes Öl nicht durch Trägheitswirkung gegen die Drehrichtung zurückfließen kann. Durch die von der Welle 7 erzeugte Fliehkraft wird das in die Fangrinne 27 von der Abspritzkante 26 abgespritzte Öl in die Tasche 31 und von dieser in die Bohrung 32 gedrängt und fließt durch diese in das Rollenlager 8 in dessen axiale Mitte. Von dort verteilt sich das Öl nach beiden Seiten über das Lager 8 und wird in ihm etwa zur Hälfte verbraucht. Das restliche Öl tritt an den Seiten des Lagers 8 in den Raum des Synchrongetriebes und den Innenraum des Kolbens 5 auf der in der Zeichnung rechten Seite des Exzenters 6 aus und reicht für die Schmierung des Synchrongetriebes 11 und die der Dichtelemente 14, 15, 16 des Kolbens 5, wobei kaum mehr Öl in die Arbeitsräume 18, 19, 20 gelangen kann. Die Ölmenge, die diesem Schmiersystem über die Bohrung 21 zugeführt wird, wird durch eine in der Zeichnung nicht dargestellte Dosierpumpe in Abhängigkeit von der Wellendrehzahl geregelt.

Bezugszeichenverzeichnis:

| 1,2 | Seitenteile |
|---|---|
| 3 | Mantelteil |
| 4 | Mantellaufbahn |
| 5 | Kolben |
| 6 | Exzenter |
| 7 | Welle |
| 8 | Kolbenlager |
| 9,10 | Wellenlager |
| 11 | Synchrongetriebe |
| 12 | Ritzel |
| 13 | Hohlrad |
| 14 | Einsatzteil |
| 15 | Radialleisten |
| 16 | Dichtbolzen |
| 17 | Seitenstreifen |
| 18,19,20 | Arbeitsräume |
| 21 | Zuführungsbohrung |
| 22 | weitere Bohrung |
| 23 | Ringraum zwischen 14 und 7 |
| 24 | Hülse, die 12 trägt |
| 25 | Ringspalt zwischen 14 und 7 |
| 26 | Abspritzkante |
| 27 | Fangrinne |
| 28 | flaches Teil |
| 29,30 | Verschraubungen von 28 |
| 31 | Tasche |
| 32 | Bohrung im Exzenter |
| 33 | Pfeil |
| 34 | rückwärtige Abschlußkante |
| 35 | Bohrung in der Lagerschale |

**Patentansprüche**

1. Schmiersystem für das Exzenterlager (8) einer Rotationskolbenbrennkraftmaschine mit einem aus zwei Seitenteilen (1, 2) und einem Mantelteil (3) mit trochoidenförmiger Mantellaufbahn (4) bestehenden Gehäuse, das von einer Exzenterwelle (7) durchsetzt ist, an dessen Exzenter (6), auf dem ein mehreckiger, von einem Synchrongetriebe (11) gesteuerter Kolben (5) auf Rollen- oder Nadellagern (8) umläuft, eine zur Exzenterwelle (7) konzentrische Fangrinne (27) für das von einer Abspritzkante (26) abgeschleudete Öl angeordnet ist, wobei die Abspritzkante (26) am Austritt eines um die Exzenterwelle (7) angeordneten Ringraumes (23) vorgesehen ist und wobei von der Fangrinne (27) Bohrungen (32) in das Exzenterlager (8) führen, dadurch gekennzeichnet, daß die Abspritzkante (26) an einem das Ritzel (12) des Synchrongetriebes (11) tragenden Einsatzteil (14) angeordnet ist und daß die nach den übrigen Maschinenräumen abgeschlossene Fangrinne (27) die Abspritzkante (26) über den gesamten Umfang mit engem Spalt umschließt.

2. Schmiersystem nach Anspruch 1, dadurch gekennzeichnet, daß an der Fangrinne (27) in deren Exzentrizitätsmaximum eine Tasche (31) angeordnet ist, von deren radial äußerster Begrenzung die Bohrung (32) in die Mitte des Exzenterlagers (8) führt, und daß deren nachlaufende Kante (34) in Drehrichtung der Exzenterwelle (7) vorgezogen ist.

3. Schmiersystem nach Anspruch 2, dadurch gekennzeichnet, daß die Fangrinne (27) an einem am Exzenter (6) verschraubten Teil (28) angeordnet ist, das auf seiner Innenseite die Tasche (31) aufweist.

4. Schmiersystem nach Anspruch 1 oder 2, dadurch gekennzeichnet, daß die Abspritzkante (26) an einer den Ringraum (23) bildenden, über das Ritzel (12) hinausragenden Hülse (24) angeordnet ist.

5. Schmiersystem nach Anspruch 1, dadurch gekennzeichnet, daß der Ringraum (23) zwischen Welle (7) und Einsatzteil (14) eine Spaltbreite von 0,1 bis 0,2 mm und der Ringspalt (25) zwischen Hülse (24) und der Welle (7) axial außerhalb des Ringraumes (23) eine Spaltbreite von 0,05 mm oder enger aufweisen.

## Claims

1. Lubricating system for the eccentric shaft bearing (8) of a rotary piston internal combustion engine with a housing comprising two side walls (1, 2) and a peripheral wall (3) having a trochoidal running surface (4), with an eccentric shaft (7) passing through the housing, on the eccentric (6) of which a multi-apex piston (5) controlled by a synchronising gear (11) rotates on rolling or needle roller (8) bearings, a collecting channel (27), concentric with the eccentric shaft (7), is provided for the oil thrown from a spraying flange (26), the spraying flange (26) being provided at the outlet of an annular space (23) arranged around the eccentric shaft (7) and the collecting channel (27) leading to bores (32) in the eccentric bearing (8), characterised in that the spraying flange (26) is arranged on an insert (14) carrying the pinion (12) of the synchronising gear (11) and that the collecting channel (27), closed off in accordance with normal machine clearances, encloses the spraying flange (26) over its entire periphery with a small clearance.

2. Lubricating system according to claim 1, characterised in that there is provided in the collecting channel (27) at its maximum eccentricity a pocket (31), from the radially outermost limit of which the bore (32) opens into the middle of the eccentric bearing (8) and that its trailing edge (34) is displaced forwards in the direction of rotation of the shaft (7).

3. Lubricating system according to claim 2 characterised in that the collecting channel (27) is arranged on a component (28) screwed to the eccentric (6) and having the pocket (31) on its inner face.

4. Lubricating system according to claim 1 or 2 characterised in that the spraying flange (26) is arranged on a sleeve (24) projecting beyond the pinion (12) and defining the annular space (23).

5. Lubricating system according to claim 1 characterised in that the annular space (23) between the shaft (7) and the insert (14) has a width of from 0.1 to 0.2 mm and the annular clearance (25) between the sleeve (24) and the shaft (7) axially beyond the annular space (23) has a width of 0.05 mm or less.

## Revendications

1. Système de lubrification pour le palier d'excentrique (8) d'un moteur à combustion interne à piston rotatif, comportant un carter constitué de deux parties latérales (1, 2) et d'une partie d'enveloppe (3) avec un pourtour d'enveloppe (4) en forme de trochoïde, carter qui est traversé par un arbre d'excentrique (7), sur l'excentrique (6) duquel — sur lequel un piston (5) polygonal, commandé par un mécanisme synchrone (11), tourne sur des roulements à rouleaux ou à aiguilles (8) —, est prévue une gorge collectrice (27) concentrique à l'arbre d'excentrique (7) pour l'huile projetée à partir d'une arête de projection (26), celle-ci (26) étant placée à la sortie d'un espace annulaire (23) prévu autour de l'arbre d'excentrique (7), et des alésages (32) menant de la gorge collectrice (27) dans le palier d'excentrique (8), caractérisé en ce que l'arête de projection (26) est prévue sur un insert (14) portant le pignon (12) du mécanisme synchrone (11), et en ce que la gorge collectrice (27) fermée par rapport aux autres compartiments du moteur entoure l'arête de projection (26) sur tout son pourtour avec une fente étroite.

2. Système de lubrification suivant la revendication 1, caractérisé en ce que, sur la gorge collectrice (27) dans son maximum d'excentricité, est prévue un espace (31), l'alésage (32) menant vers le milieu du palier d'excentrique (8) à partir de la limitation radiale la plus à l'extérieure de cet espace, et en ce que son arête de fermeture (34) qui se trouve à l'arrière en considérant le sens de rotation de l'arbre d'excentrique (34) s'étire vers l'avant dans le sens de rotation de l'arbre (7).

3. Système de lubrification suivant la revendication 2, caractérisé en ce que la gorge collectrice (27) est placée sur une partie (28) vissée sur l'excentrique (6), cette partie présentant l'espace (31) sur son côté intérieur.

4. Système de lubrification suivant la revendication 1 ou 2, caractérisé en ce que l'arête de projection (26) est prévue sur un manchon (24) formant l'espace annulaire (23) et faisant saillie au-delà du pignon (12).

5. Système de lubrification suivant la revendication 1, caractérisé en ce que l'espace annulaire (23) entre l'arbre (7) et l'insert (14) présente une largeur de fente de 0,1 à 0,2 mm et la fente annulaire (25), entre le manchon (24) et l'arbre (7) présente, axialement à l'extérieur de l'espace annulaire (23) une largeur de fente de 0,05 mm ou moins.

## Fig.1

Fig. 2